(19) Europäisches Patentamt
European Patent Office
Office européen des brevets

(11) **EP 1 221 780 B1**

(12) **EUROPÄISCHE PATENTSCHRIFT**

(45) Veröffentlichungstag und Bekanntmachung des Hinweises auf die Patenterteilung:
**24.09.2003 Patentblatt 2003/39**

(51) Int Cl.⁷: **H04L 1/06**, H04B 7/08

(21) Anmeldenummer: **01123779.9**

(22) Anmeldetag: **04.10.2001**

(54) **Verfahren und System zur Interferenzunterdrückung für TDMA- und/oder FDMA-Übertragung**

Method and system for the interference suppression of a TDMA and/or FDMA transmission

Méthode et système pour la suppression d'interférence d'une transmission TDMA et/ou FDMA

(84) Benannte Vertragsstaaten:
**AT BE CH CY DE DK ES FI FR GB GR IE IT LI LU MC NL PT SE TR**

(30) Priorität: **28.12.2000 EP 00128664**

(43) Veröffentlichungstag der Anmeldung:
**10.07.2002 Patentblatt 2002/28**

(73) Patentinhaber: **Com-Research GmbH Solutions for Communication Systems**
**90765 Fürth (DE)**

(72) Erfinder:
- **Meyer, Raimund, Dr.**
  **90765 Fürth (DE)**
- **Schober, Robert, Dr.**
  **University Toronto, Ontario M5S 3G4 (CA)**
- **Gerstacker, Wolfgang, Dr.**
  **90482 Nürnberg (DE)**

(74) Vertreter: **Schurack, Eduard F. et al**
**Hofstetter, Schurack & Skora**
**Balanstrasse 57**
**81541 München (DE)**

(56) Entgegenhaltungen:
**EP-A- 0 669 729**

- **ARIYAVISITAKUL S ET AL: "JOINT EQUALIZATION AND INTERFERENCE SUPPRESSION FOR HIGH DATA RATE WIRELESS SYSTEMS" HOUSTON, TX, MAY 16 - 20, 1999, NEW YORK, NY: IEEE, US, Bd. CONF. 49, 1999, Seiten 700-706, XP000937866 ISBN: 0-7803-5566-0**
- **LO B C W ET AL: "ADAPTIVE EQUALIZATION AND INTERFERENCE CANCELLATION FOR WIRELESS COMMUNICATION SYSTEMS" IEEE TRANSACTIONS ON COMMUNICATIONS, IEEE INC. NEW YORK, US, Bd. 47, Nr. 4, April 1999 (1999-04), Seiten 538-544, XP000860509 ISSN: 0090-6778**

**Beschreibung**

Die Erfindung betrifft Verfahren zur digitalen Übertragung von Daten wie sie zum Beispiel bei digitalen Mobilfunksystemen oder Kabelübertragungssystemen eingesetzt werden. Sie betrifft insbesondere ein Verfahren zur Interferenzunterdrückung für TDMA- und/oder FDMA-Übertragung, die zumindest näherungsweise durch Pulsamplitudenmodulation beschreibbar ist, mit einer beliebigen Anzahl an Empfangsantennen, bei der zumindest ein komplexwertiges Empfangssignal einer Empfangsantenne mit einem Filter mit komplexwertigen Koeffizienten zur Erzeugung zumindest eines Ausgangssignals gefiltert wird. TDMA und FDMA bezeichnen hierbei die Zugriffskonzepte Time-Division Multiple Access sowie Frequency-Division Multiple Access. Darüber hinaus betrifft die Erfindung ein System zur Interferenzunterdrükkung für TDMA und/oder FDMA-Übertragung, die zumindest näherungsweise durch Pulsamplitudenmodulation beschreibbar ist, umfassend eine beliebige Anzahl an Empfangsantennen sowie mindestens eine Filtervorrichtung mit komplexwertigen Koeffizienten zur Filterung mindestens eines komplexwertigen Empfangssignals einer Empfangsantenne zur Erzeugung zumindest eines Ausgangssignals.

Bei der digitalen Übertragung über dispersive Kanäle, z. B. über einen Mobilfunkkanal oder über Zweidrahtleitungen, wird das Sendesignal verzerrt und durch Rauschen gestört. Im Empfänger sind somit spezielle Maßnahmen zur Wiedergewinnung der gesendeten Daten aus dem Empfangssignal notwendig, d.h. ein Entzerrverfahren muß eingesetzt werden. Das optimale Verfahren zur Entzerrung dispersiver Kanäle ist die Maximum-Likelihood-Sequenzschätzung (Maximum-Likelihood Sequence Estimation, MLSE), beschrieben in G.D. Forney, Jr. "Maximum-Likelihood Sequence Estimation of Digital Sequences in the Presence of Intersymbol Interference", IEEE Transactions on Information Theory, IT-18, 363-378, May 1972, die mittels des Viterbi-Algorithmus durchgeführt werden kann. Allerdings kann der Viterbi-Algorithmus bei langen Kanalimpulsantworten und/oder nichtbinären Signalalphabeten wegen des dann sehr hohen Aufwandes in der Praxis nicht mehr realisiert werden. Somit müssen in diesen Fällen suboptimale Verfahren wie zustandsreduzierte Sequenzschätzung, z.B. in den Varianten Reduced-State Sequence Estimation (RSSE), beschrieben in M.V. Eyuboglu, S.U. Qureshi "Reduced-State Sequence Estimation with Set Partitioning and Decision Feedback", IEEE Trans. on Commun., COM-36, 13-20, January 1988, oder Decision-Feedback Sequence Estimation (DFSE), beschrieben in A. Duel-Hallen, C. Heegard "Delayed Decision-Feedback Sequence Estimation", IEEE Trans. on Commun., COM-37, 428-436, May 1989, verwendet werden.

Die genannten Verfahren sind alle für den Fall optimiert, daß das Empfangssignal durch additives weißes Gaußsches Rauschen (additive white Gaussian noise, AWGN) gestört wird. Treten zusätzliche Störungen durch Interferenzen anderer übertragener Signale auf, so muß mit einer starken Degradation des Entzerrverfahrens aufgrund einer Metrikfehlanpassung und zu starker Varianz der Störung gerechnet werden. Interferenzstörungen spielen in Mobilfunksystemen und Kabelübertragungssystemen eine zunehmend bedeutende Rolle. Eine Degradation der Leistungseffizienz resultiert sowohl bei Nachbarkanalinterferenz (Adjacent Channel Interference, ACI) als auch bei Gleichkanalinterferenz (Cochannel Interference, CCI, d.h. Nutzund Störsignal belegen das gleiche Frequenzband), sofern keine zusätzlichen Maßnahmen getroffen werden. Vor der Entzerrung sollte die Interferenz durch eine Vorverarbeitung stark reduziert werden, so daß die verbleibende Reststörung möglichst gering und weiß ist. Da die spektrale Charakteristik der Interferenz bei einer blockweisen Übertragung meist von Block zu Block variiert, ist die Vorverarbeitung in jedem Block neu einzustellen. Eine geeignete Vorverarbeitungsstrategie wurde in S. Ariyavisitakul, J.H. Winters, N.R. Sollenberger "Joint Equalization and Interference Suppression for High Data Rate Wireless Systems", in Proceedings of Vehicular Technology Conference (VTC'99 Spring), S. 700-706, Houston, Texas, 1999 angegeben. Mit dieser Strategie kann allerdings nur bei Diversity-Empfang eine gute Leistungsfähigkeit erreicht werden, d.h. es müssen mindestens zwei Empfangsantennen vorliegen. Die darin beschriebene Lehre wurde zur Formulierung des Oberbegriffs der unabhängigen Ansprüche verwendet.

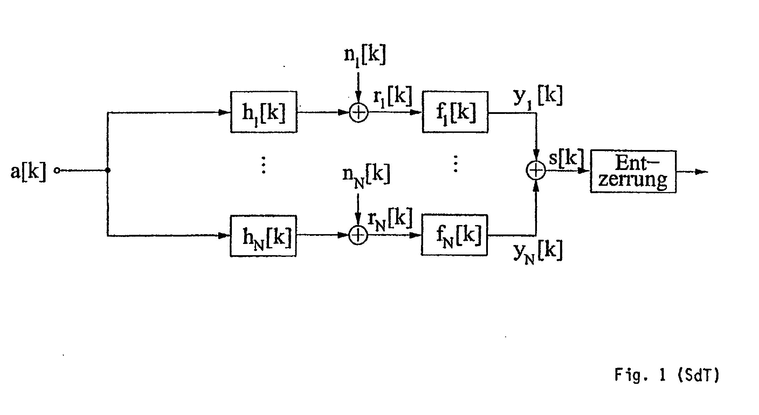

Eine Übertragung mit Pulsamplitudenmodulation (PAM) über einen verzerrenden Kanal, der Intersymbolinterferenzen (ISI) erzeugt, kann bekanntlich zeitdiskret gemäß Figur 1 modelliert werden. Es wird der allgemeine Fall von $N$-facher Antennendiversität ($N \geq 1$) im Empfänger angenommen; als Spezialfall ($N=1$) ergibt sich der Mono-Empfang. Die im Symboltakt $1/T$ abgetasteten Empfangssignale ergeben sich als durch Störung beeinträchtigte Faltung der PAM-Sendesequenz $a[k]$ mit der Impulsantwort $h_i[k]$ des zur i-ten Antenne gehörigen Kanals, deren Länge mit $L_i$ bezeichnet wird:

$$r_i[k] = \sum_{\kappa=0}^{L_i-1} h_i[\kappa]\, a[k-\kappa] + n_i[k], \qquad i \in \{1,2,...,N\} \tag{1}$$

Je nach verwendetem Modulationsverfahren sind die Amplitudenkoeffizienten a[k] und die Kanalimpulsantworten $h_i[k]$ entweder rein reell, rein imaginär oder komplex; im Hinblick auf die Erfindung werden nachfolgend ausschließlich Modulationsverfahren betrachtet, deren Amplitudenkoeffizienten im Empfänger als rein reell, rein imaginär oder auf einer beliebigen Geraden in der komplexen Ebene liegend, modelliert werden können. Durch PAM-Signale können z.B. auch binäre CPM- (Continuous Phase Modulation) Verfahren näherungsweise beschrieben werden, wie in P.A. Laurent "Exact and approximate construction of digital phase modulations by superposition of amplitude modulated pulses (AMP)", IEEE Trans. on Commun., COM 34, 150-160, 1986 beschrieben, die aufgrund ihrer Bandbreiteneffizienz und ihres geringen Spitzenwertfaktors oft in der Mobilkommunikation eingesetzt werden. Die zeitdiskrete Störung $n_i[k]$ besteht aus zwei Komponenten,

$$n_i[k] = n_i^{AWGN}[k] + n_i^{INT}[k], \tag{2}$$

wobei $n_i^{AWGN}[k]$ den AWGN-Anteil symbolisiert, der mittelwertfrei, gaußverteilt und weiß ist (letzteres ist bei Verwendung eines Whitened-Matched-Filters, wie beschrieben in G.D. Forney, Jr. "Maximum-Likelihood Sequence Estimation of Digital Sequences in the Presence of Intersymbol Interference", IEEE Transactions on Information Theory, IT-18, 363-378, May 1972, oder eines allgemeinen Wurzel-Nyquist-Filters als zeitkontinuierliches Empfängereingangsfilter vor der Abtastung gegeben). Die Störung durch $n_i^{AWGN}[k]$ ist hauptsächlich auf thermisches Rauschen in der Empfängereingangsstufe zurückzuführen. $n_i^{INT}[k]$ stellt die Störung durch Interferenz dar,

$$n_i^{INT}[k] = \sum_{\mu=1}^{I} \sum_{\kappa=0}^{L_{i,\mu}^{INT}-1} h_{i,\mu}^{INT}[\kappa]\, a_\mu^{INT}[k-\kappa], \qquad i \in \{1,2,...,N\}. \tag{3}$$

Dabei bezeichnet $h_{i,\mu}^{INT}[\kappa]$ die Impulsantwort der Übertragung vom $\mu$-ten Interferenz-Störer zur Empfangsantenne $i$ und $L_{i,\mu}^{INT}$ die entsprechende Impulsantwortlänge. Es wird der allgemeine Fall von /Interferenz-Störern betrachtet, deren Datensymbole mit $a_\mu^{INT}[\kappa]$ bezeichnet werden; auch hier werden im Hinblick auf die Erfindung ausschließlich Modulationsverfahren mit rein reellen, rein imaginären oder Amplitudenkoeffizienten die auf einer beliebigen Geraden in der komplexen Ebene liegen, unterstellt. Da die Fälle rein imaginärer bzw. auf einer beliebigen Geraden liegenden Amplitudenkoeffizienten durch eine einfache konstante Phasendrehung auf den Fall reeller Amplitudenkoeffizienten zurückgeführt werden können, wird im weiteren nur dieser Fall betrachtet.

Für eine Fractionally-Spaced-Abtastung mit Abtasttakt $K/T$ ($K$: Überabtastfaktor, z.B. $K=2$) der zeitkontinuierlichen Empfangssignale der verschiedenen Antennen resultiert prinzipiell dasselbe Modell. In diesem Fall können die zeitdiskreten Empfangssignale der verschiedenen Antennen durch jeweils $K$ im Symboltakt $1/T$ vorliegende Polyphasenkomponenten repräsentiert werden. Insgesamt erhöht sich die Anzahl der zeitdiskreten Empfangssignale im Symboltakt also auf $N \cdot K$. Somit sind die weiteren Betrachtungen prinzipiell auch auf Fractionally-Spaced-Abtastung anwendbar. Zur Rekonstruktion der gesendeten Symbole sind zwei prinzipiell verschiedene Ansätze möglich, vgl. z.B C. Tidestav, M. Sternad, A. Ahlen "Reuse Within a Cell - Interference Rejection or Multiuser Detection", IEEE Trans. on Commun., COM-47, 1511-1522, October 1999. So können zum einen Prinzipien der Multiuser-Detektion angewendet werden, d.h. die Symbolfolgen $a[\cdot]$ und $a_\mu^{INT}[\cdot]$, $\mu \in \{1,2,...,I\}$ werden gemeinsam geschätzt (Joint Maximum--Likelihood Sequence Estimation). In den Ausdrücken für die Symbolfolgen symbolisiert der Punkt $[\cdot]$ die komplette Symbolfolge $a[k]$, mit $-\infty < k < +\infty$. Mit diesem Ansatz kann eine optimale Schätzgüte erreicht werden. Allerdings ist der benötigte Rechenaufwand bei einer gemeinsamen (bzw. iterativen) Schätzung sehr hoch. Zudem werden hierfür die Impulsantworten $h_{i,\mu}^{INT}[\kappa]$ benötigt, deren Schätzung sich als sehr schwierig gestaltet, da der Empfänger i. allg. keine Kenntnis der Trainingssequenzen der Interferenzsignale besitzt und ihm die zeitliche Position der Trainingssequenzen ebenfalls unbekannt ist, vgl. z.B. B.C. Wah Lo, K. Ben Letaief "Adaptive Equalization and Interference Cancellation for Wireless Communication Systems", IEEE Trans. on Commun. COM-47, 538-545, April 1999.

Aus diesen Gründen erweist sich der zweite Ansatz als vielversprechender, bei dem zuerst eine Interferenzunterdrückung und anschließend eine Entzerrung durchgeführt wird. Ein auf diesem Ansatz basierendes Verfahren wurde in S. Ariyavisitakul, J.H. Winters, N.R. Sollenberger "Joint Equalization and Interference Suppression for High Data Rate Wireless Systems", in Proceedings of Vehicular Technology Conference (VTC'99 Spring), S. 700-706, Houston, Texas, 1999, vorgeschlagen. Dabei werden die $N$ verschiedenen zeitdiskreten Empfangssignale $y_i[k]$ separat vorgefiltert und dann die Ausgangssignale der Vorfilter, vgl. Figur 1, kombiniert. Anschließend erfolgt eine Entzerrung, z.B. eine MLSE, RSSE, DFSE oder DFE (Decision-Feedback Equalization). Das resultierende Blockschaltbild des Empfängers ist in Figur 1 dargestellt. Das Signal nach Feedforward-Filterung und Kombination ist durch

$$s[k] = \sum_{i=1}^{N} \sum_{\kappa=0}^{L_i^f - 1} f_i[\kappa] r_i[k - \kappa] \qquad (4)$$

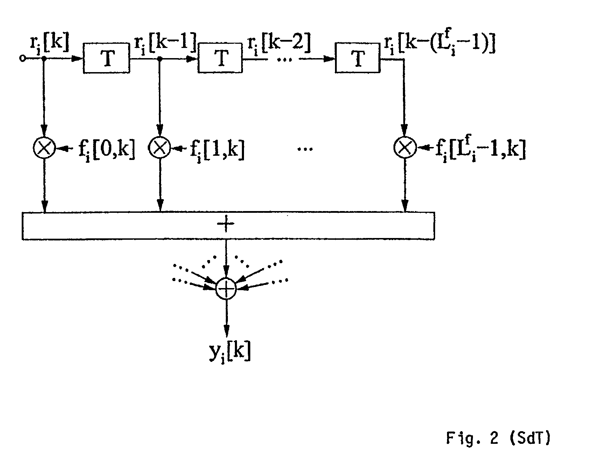

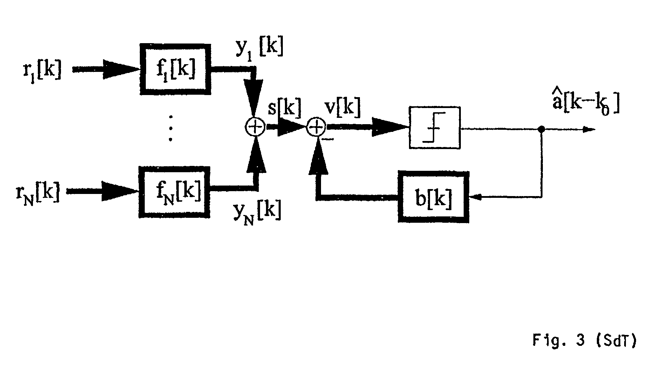

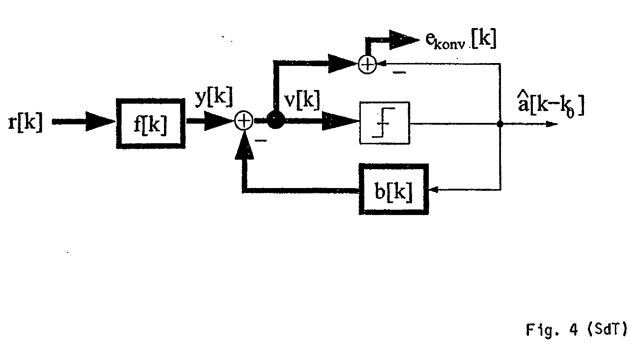

gegeben. Das $i$-te Filter zur Filterung der Empfangssequenz $ri[k]$ ist in Figur 2 detailliert dargestellt. Die Optimierung der Filterimpulsantworten $fi[k]$ mit Längen $L_i^f$ erfolgt z.B. mithilfe eines adaptiven Multlple-Input-Single-Output Minimum Mean-Squared Error Decision-Feedback Equalizers (MISO MMSE-DFE), dessen Struktur in Figur 3 dargestellt ist. Dabei symbolisieren dicke Linien komplexwertige bzw. dünne Linien reellwertige Signale und Systeme. Für den Spezialfall einer einzigen Empfangsantenne *(N=1)* resultiert die Struktur nach Figur 4. Die komplexwertigen Impulsantworten $f_i[k]$ spielen in der DFE die Rolle von Feedforward-Filtern und sind gemeinsam mit dem komplexwertigen Feedback-Filter $b[k]$ adaptiv zu optimieren. Nach abgeschlossener Adaption werden die Filterkoeffizienten der Feedforward-Filter für die Struktur nach Figur 1 übernommen. Bei genügend großen Filterlängen ist die Interferenz nach der Kombination der Feedforward-Filter-Ausgangssignale deutlich reduziert; darüberhinaus ist die Gesamtstörung an diesem Punkt näherungsweise weiß und gaußverteilt, so daß der anschließende Einsatz eines trellisbasierten Entzerrverfahrens gerechtfertigt ist.

Zur Vorfilterberechnung kann kein geschlossenes Berechnungsverfahren, für das Vorfilter einer DFSE/RSSE bei Störung ausschließlich durch weißes Rauschen vorgeschlagen, angewendet werden. Hierzu würden neben den Impulsantworten $h_i[k]$ auch die Impulsantworten der Interferenzsignale $h_\mu^{INT}[\kappa]$ benötigt werden, die jedoch nicht in einfacher Weise geschätzt werden können, da die Trainingssequenzen der Interferenzsignale im Empfänger i. allg. nicht bekannt sind. Somit muß die Filterberechnung über einen rekursiven adaptiven Algorithmus erfolgen. In S. Ariyavisitakul, J.H. Winters, N.R. Sollenberger "Joint Equalization and Interference Suppression for High Data Rate Wireless Systems", Proceedings of Vehicular Technology Conference (VTC'99 Spring), S. 700-706, Houston, Texas, 1999, wurde der Einsatz des Recursive-Least-Squares (RLS) Algorithmus, vgl. auch S. Haykin "Adaptive Filter Theory", Prentice Hall, Upper Saddle River, New Jersey, third edition, 1996, zur Filteroptimierung vorgeschlagen. Ein wesentlicher Nachteil der beschriebenen Vorgehensweise ist, daß damit für den Fall von Mono-Empfang *(N=1)* keine gute Leistungsfähigkeit erreicht werden kann. Der wesentliche Grund hierfür liegt darin, daß eine Interferenzstörung in diesem Fall nur unzureichend unterdrückt werden kann. Mit Bezug auf Figur 3 umfassen die Signale $r_1[k]$ und $r_2[k]$ für *N*=2 das jeweilige Empfangssignal sowie Rauschen, wobei im Rauschen die Interferenzsignale mitumfasst sind. Durch geeignete Einstellung der Filterkoeffizienten kann erreicht werden, daß sich die Interferenzsignale gegenseitig eliminieren. Bei *N=1* und damit dem Vorliegen nur eines Empfangssignals ist dies naturgemäß nicht möglich.

Aus der EP 0 669 729 ist bekannt, Antennenarrays zur Unterdrückung von Interferenz- und Rauschstörungen zu verwenden. Die Empfangssignale der einzelnen Empfangsantennen werden zu einem Vektor zusammengefasst, der auf verschiedene Vektoren projiziert wird, die anhand der räumlichen Korrelationsmatrix der aus Interferenz und Kanalrauschen bestehenden Gesamtstörung bestimmt werden. Damit kann die Gesamtstörung räumlich dekorreliert werden und ein maximum ratio combining der vorverarbeiteten Antennensignale zur Störreduktion ist in einfacher Weise möglich. Danach wird das Nutzsignal, das zusätzlich noch von Intersymbolinterferenzen beeinträchtigt ist, mittels eines herkömmlichen eindimensionalen komplexen Entzerrprozesses wiedergewonnen. Die in dem Verfahren vorgenommenen Projektionen werden auf Vektoren vorgenommen, deren Anzahl von Dimensionen N der Anzahl der Antennen N entspricht. Eine Unterdrückung von Interferenzen bei nur einer einzigen Empfangsantenne ist nicht möglich.

Die Aufgabe der vorliegenden Erfindung besteht deshalb darin, das gattungsgemäße Verfahren und das gattungsgemäße System derart weiterzubilden, daß eine verbesserte Interferenzunterdrückung ermöglicht wird. Gemäß einem weiteren Aspekt der Erfindung soll eine gute Interferenzunterdrückung auch bei Mono-Empfang ermöglicht werden. Weiterhin ist erwünscht, die Leistungsfähigkeit bei Diversity-Empfang gegenüber den bisher vorgeschlagenen Interferenzunterdrückungsverfahren weiter zu verbessern.

Diese Aufgaben werden erfindungsgemäß gelöst durch ein Verfahren mit den Merkmalen von Anspruch 1 sowie durch ein System mit den Merkmalen von Anspruch 12.

Die Erfindung basiert auf der Erkenntnis, daß als Folge der Projektionen die Interferenzstörung und das Nutzsignal separiert werden können. Da nämlich nur die Projektionen der Empfangssignale verarbeitet werden, können Filterkoeffizienten zur Minimierung des Fehlers in der Summe der projizierten Signale, der ausschließlich von Interesse ist, gefunden und verwendet werden.

Das erfindungsgemäße Verfahren und das erfindungsgemäße System erlauben eine (adaptive) Interferenzunterdrückung für eine Entzerrung mit bzw. ohne Antennendiversität bei Übertragung mit Pulsamplitudenmodulation mit rein reellwertigen, rein imaginären oder auf einer beliebigen Geraden in der komplexen Ebene liegenden Datensequenzen und hinreichend unterschiedlichen Impulsantworten. Insbesondere im Fall von Mono-Empfang kann eine deutlich bessere Interferenzunterdrückung als bei Verfahren nach dem Stand der Technik erreicht werden; mit dem erfindungsgemäßen Verfahren können i. allg. *2N-1* Interferenzsignale unterdrückt werden, im Vergleich zu nur *N-1* Interferenzsignalen beim herkömmlichen Verfahren. Die Fehlerrate der nachfolgenden Entzerrung kann durch das erfindungsgemäße Verfahren deutlich reduziert werden.

Das Verfahren verursacht in einer praktischen Implementierung meist keinen Mehraufwand oder sogar einen geringeren Aufwand im Vergleich zu Verfahren nach dem Stand der Technik. Vergleicht man beispielsweise die aus dem Stand der Technik bekannte Figur 3 bzw. 4 mit der neuen Struktur nach Figur 6 bzw. 7, so zeigt sich, daß lediglich Projektionen $P_1\{\cdot\}$ bis $P_n\{\cdot\}$ zusätzlich durchzuführen sind, wohingegen vereinfachend das Rückkopplungsfilter rein reell wird.

Bei einer besonders bevorzugten Ausführungsform der Erfindung liegen mindestens zwei Empfangssignale $r_i[k]$ vor, wobei die zugehörigen mindestens zwei Ausgangssignale $y_i[k]$ in Schritt b) auf identische Richtungsvektoren projiziert werden. Diese Maßnahme resultiert in vorteilhafter Weise darin, daß Projektions- und Summationsschritt vertauscht werden können, wobei die Projektionen nach der Summation als eine einzige Projektion realisiert werden können.

Bei einer weiteren bevorzugten Ausführungsform werden für die Filterung der Empfangssignale in Schritt a) Feedforward-Filter einer DFE mit reellwertigem Feedback-Filter verwendet, die systematisch optimiert werden, insbesondere nach den Kriterien ZF, MMSE oder Impulsverkürzung. Dadurch wird es möglich eine Optimierung der Filterkoeffizienten in einfacher Weise vorzunehmen.

Zur Optimierung der Filterkoeffizienten werden bevorzugt die Signale nach den Projektionen herangezogen. Dadurch wird eine verbesserte Interferenzunterdrückung ermöglicht, da die Interferenz in die Summe der orthogonalen Komplemente der Projektionen verlagert wird.

Zur Einstellung der Filterkoeffizienten des mindestens einen komplexwertigen Filters kann ein beliebiger adaptiver Algorithmus verwendet werden. Hierdurch wird sichergestellt, daß eine Anpassung an die jeweilige Interferenzsituation automatisch erfolgt.

Der adaptive Algorithmus zur Einstellung der Filterkoeffizienten kann eine dem Empfänger bekannte Trainingssequenz verwenden. Falls jedoch keine dem Empfänger bekannte Trainingssequenz übertragen wird oder diese zu kurz ist, kann vorgesehen werden, einen blinden adaptiven Algorithmus zur Einstellung der Filterkoeffizienten zu verwenden.

Durch Berechnung des orthogonalen Komplements der Projektion für mindestens ein gefiltertes Ausgangssignal $y_i[k]$ läßt sich in einfacher Weise ein Gütekriterium für die Übertragungsqualität ermitteln.

Bei sendeseitiger Antennendiversität kann in einem ersten Schritt zumindest ein Teil der Sendesignale als Interferenzstörung interpretiert und mit dem erfindungsgemäßen Verfahren unterdrückt werden. Anschließend können in einem zweiten Schritt die im ersten Schritt detektierten Datensymbole zur Nachbildung der entsprechenden Empfangssignalanteile benutzt werden; durch Differenzbildung lassen sich die entsprechenden Signalanteile aus dem Empfangssignal entfernen womit eine Detektion der verbliebenen, im ersten Schritt als Interferenzstörung interpretierte Datensymbole ermöglicht wird. Alternativ dazu kann im zweiten Schritt eine Wiederholung des ersten Schrittes stattfinden, wobei nunmehr die im ersten Schritt detektierten Datensymbole als Interferenzstörung angenommen werden und die im ersten Schritt als Interferenzstörung angenommenen Datensymbole als Nutzsymbole interpretiert werden. Somit eignet sich das Verfahren auch zur Erzielung einer hohen Leistungsfähigkeit bei sendeseitiger Antennendiversität.

Weitere vorteilhafte Ausführungsformen der Erfindung sind in den Unteransprüchen definiert.

Im folgenden werden Ausführungsbeispiele der Erfindung unter Hinweis auf die beigefügten Zeichnungen näher beschrieben. Es zeigen:

Figur 1: in zeitdiskreter Darstellung ein Blockschaltbild einer digitalen Übertragung mit N-facher Antennendiversität im Empfänger (Stand der Technik);

Figur 2: eine detaillierte Darstellung des i-ten Feedforward-Filters zur Filterung des i-ten Empfangssignals (Stand der Technik);

Figur 3: in Blockschaltbilddarstellung einen konventionellen DFE-Empfänger für den Fall von N Empfangsantennen (Stand der Technik);

Figur 4: in Blockschaltbilddarstellung einen konventionellen DFE-Empfänger für den Fall von einer Empfangsantenne (Stand der Technik);

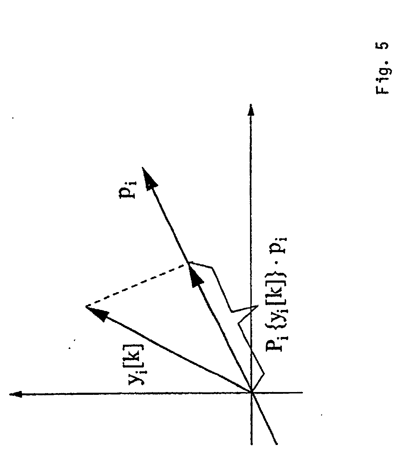

Figur 5: in schematischer Darstellung die Projektion $P_i\{y_i[k]\}$ des Signals $y_i[k]$ auf einen komplexen Vektor $\boldsymbol{p}_i$ mit Länge Eins;

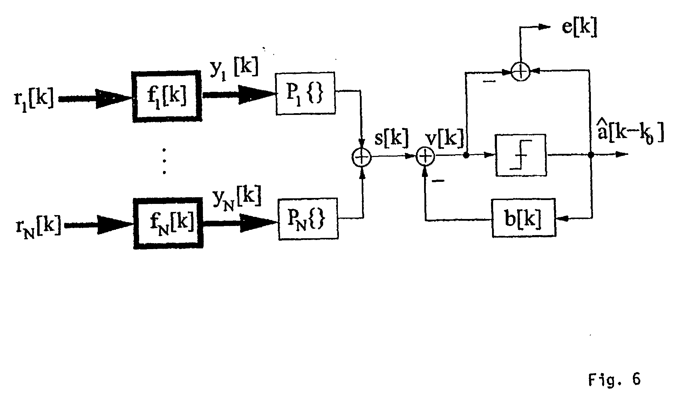

Figur 6: einen DFE-Empfänger für den Fall von N Empfangsantennen mit Durchführung von Projektionen nach den Feedforward-Filterungen gemäß der Erfindung;

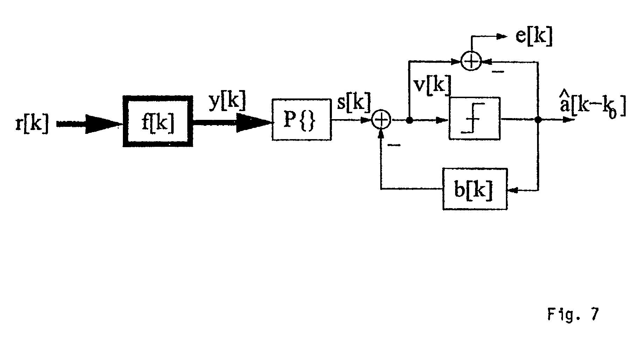

Figur 7: einen DFE-Empfänger für den Fall einer Empfangsantenne (Mono-Betrieb) mit Durchführung einer Projektion nach der Feedforward-Filterung gemäß der Erfindung. und

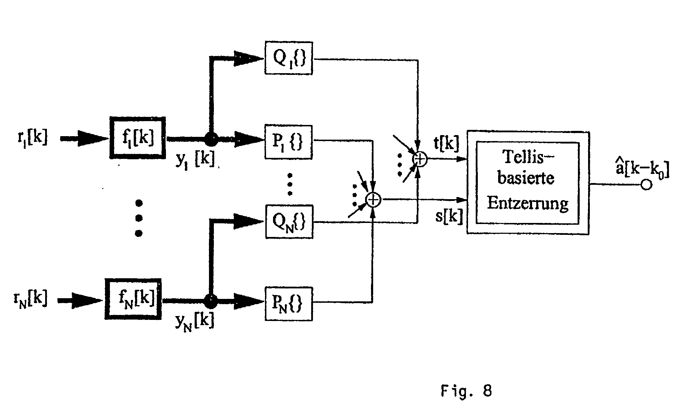

Figur 8: einen DFE-Empfänger, bei dem zusätzlich die Summe der orthogonalen Komplemente der Projektionen der Feedforward-Filter-Ausgangssignale verarbeitet wird.

Bei der Erfindung wird eine Verbesserung der Interferenzunterdrückung dadurch erzielt, daß eine Modifikation der DFE-Struktur nach Figur 3 bzw. Figur 4 vorgenommen wird. Nach den komplexwertigen Feedforward-Filteroperationen werden nun Projektionen $P_i\{\cdot\}$ auf komplexe Vektoren $\boldsymbol{P}_i$ mit Länge Eins vorgenommen, vgl. Figur 5, die rein reellwertige Ergebnisse $P_i\{y_i[\cdot]\}$ liefern. Dies führt auf eine Struktur gemäß Figur 6. Aufgrund der Reellwertigkeit des Signals $y[k]$ genügt nun eine Feedback-Filterung mit einem rein reellwertigen Filter $b[k]$; das Fehlersignal $e[k] = v[k] - a[k-k_0]$ ist ebenfalls rein reellwertig. Für die Minimierung der Leistung von $e[k]$ werden die orthogonalen Komplemente der Feedforward-Filter-Ausgangssignale bzgl. der Projektionsoperatoren $P_i\{\cdot\}$ also nicht weiter betrachtet, was zulässig ist, da für die Entscheidungsbildung bei reellwertigen Amplitudenkoeffizienten ohnehin nur eine Dimension von Interesse ist. Die Filterkoeffizienten können nun gezielt zur Minimierung des Fehlers in der Summe der projizierten Signale, der ausschließlich von Interesse ist, eingestellt werden, bei Vernachlässigung der orthogonalen Komplemente. Als Konsequenz kann die Interferenzstörung durch geeignete Koeffizientenwahl größtenteils in die Summe der orthogonalen Komplemente der Projektionen der Feedforward-Filter-Ausgangssignale verlagert werden, die zur Entscheidungsbildung irrelevant ist. Somit kann die Summe der orthogonalen Komplemente optional zur Schätzung der Interferenzleistung herangezogen werden. Ein für eine Realisierung interessanter Spezialfall resultiert, wenn alle $N$ Projektionsvektoren der Ausgangssignale $y_i[k]$ identisch sind und damit die Projektionen als eine einzige Projektion nach der Summation realisiert werden können.

Es erweist sich, daß bei günstiger Einstellung der Vorfilterkoeffizienten $f_i[k]$, $1 \leq i \leq N$, eine sehr gute Interferenzunterdrückung erreicht werden kann, sofern die Kanalimpulsantworten $h_i[\kappa]$ bzw. $h_{i,u}^{INT}[\kappa]$ hinreichend unterschiedlich und die Datensymbolfolgen $a_i[k]$ bzw. $a_{i,u}^{INT}[k]$ reellwertig sind. Nach der Vorfilterung mit den Feedforward-Filtern der modifizierten DFE zur Interferenzunterdrückung gemäß Figur 6 und den anschließenden Projektionen der Filterausgangssignale kann eine Entzerrung, z.B. mit einem Sequenzschätzverfahren wie MLSE, DFSE oder RSSE erfolgen. Als Nutzsignal $\widetilde{y}[k]$ des Entzerrverfahrens ergibt sich

$$\widetilde{y}[k] \quad = \quad a[k-k_0] \quad + \sum_{\kappa=1}^{L^b} b[\kappa]\, a[k-k_0-\kappa]\,. \tag{5}$$

Die benötigte Komplexität des Entzerrverfahrens kann optional über die Wahl der Feedback-Filter-Länge $L^b$, das heißt die Anzahl der Koeffizienten $b[k]$ gesteuert werden (Impulsverkürzung mit DFE). Die Optimierung der DFE-Filter kann nach verschiedenen Kriterien erfolgen, z.B. Zero-Forcing-Kriterium, Maximum SNR oder minimaler quadratischer Fehler (Minimum Mean-Squared Error, MMSE). Als Spezialfall wird die adaptive Einstellung der DFE nach dem MMSE-Kriterium mithilfe des Least-Mean-Square (LMS) Algorithmus betrachtet. Dabei ist für die Adaption zu beachten, daß zur Fehlerberechnung im Algorithmus und für die Feedback-Filterung eine Kenntnis der Datensymbole erforderlich ist. Somit wird die bei vielen Übertragungssystemen zur Kanalschätzung übertragene Trainingssequenz auch zur DFE-Adaption verwendet, d.h. zur Fehlerberechnung und Feedback-Filterung werden Trainingssymbole verwendet. Die Adaption kann während der Übertragung der Datensymbole entscheidungsgestützt weitergeführt werden, d.h. anstelle von Trainingssymbolen werden dann vom Entzerrer gelieferte geschätzte Datensymbole verwendet, die nach der Trainingsphase mit hinreichend hoher Wahrscheinlichkeit mit den tatsächlichen Datensymbolen übereinstimmen. Alternativ kann anstelle des LMS-Algorithmus auch der Recursive-Least-Squares (RLS) Algorithmus oder ein blindes Adaptionsverfahren verwendet werden, das nur die Kenntnis der Statistik der Datensequenzen, nicht aber die der Datensymbole selbst benötigt. In diesem Fall muß allerdings eine langsamere Konvergenz als bei trainierten Adaptionsverfahren in Kauf genommen werden.

Zur Beschreibung des LMS-Algorithmus zur Adaption der neu eingeführten DFE-Struktur werden die (konjugiert komplexen) Filterkoeffizienten der Einfachheit halber in Vektoren zusammengefaßt,

$$\boldsymbol{f}_i[k] = \begin{bmatrix} f_i[0,k] & f_i[1,k] & \cdots & f_i[L_i^f - 1,k] \end{bmatrix}^H, \quad i \in \{1,2,\ldots,N\}, \tag{6}$$

$$\boldsymbol{b}[k] = \begin{bmatrix} b[1,k] & b[2,k] & \cdots & b[L^b,k] \end{bmatrix}^T, \tag{7}$$

$((.)^H$ bedeutet Hermitesche Transposition und $(.)^T$ Transposition). Die Filterkoeffizienten sind nun aufgrund der Adaption zeitveränderlich. Dies zeigt sich daran, daß die Filterkoeffizienten nun zusätzlich auch von der Echtzeit k abhängig sind. Das Signal $y[k]$ nach den Projektionen und der Kombination ist durch

$$s[k] = \sum_{i=1}^{N} P_i \left\{ \boldsymbol{f}_i^H[k]\boldsymbol{r}_i[k] \right\} \tag{8}$$

gegeben mit

$$\boldsymbol{r}_i[k] = \begin{bmatrix} r_i[k] & r_i[k-1] & \cdots & r_i[k-(L_i^f-1)] \end{bmatrix}^T, \quad i \in \{1,2,\ldots,N\}. \tag{9}$$

Das Entscheidereingangssignal der DFE ergibt sich schließlich zu

$$v[k] \quad = \quad s[k] - \boldsymbol{b}^T[k]\hat{\boldsymbol{a}}[k] \quad = \quad \sum_{i=1}^{N} P_i \left\{ \boldsymbol{f}_i^H[k]\boldsymbol{r}_i[k] \right\} - \boldsymbol{b}^T[k]\hat{\boldsymbol{a}}[k],$$

$$(10)$$

mit

$$\hat{\boldsymbol{a}}[k] = \begin{bmatrix} \hat{a}[k-k_0-1] & \hat{a}[k-k_0-2] & \cdots & \hat{a}[k-k_0-L^b] \end{bmatrix}^T. \tag{11}$$

Die Entscheidungsverzögerung $k_0$ ist ein Freiheitsgrad, der zur Optimierung der Leistungseffizienz genutzt werden kann. Dabei bezeichnet $\hat{a}[\cdot]$ die durch die DFE entschiedene Datensequenz. Liegt eine bekannte Datensequenz als Trainingssequenz (Trainingsphase) vor, so können die $\hat{a}[\cdot]$ durch die bekannten Datensymbole $a[\cdot]$ ersetzt werden. Entsprechend ist in Figur 6 $\hat{a}[\cdot]$ bei Fehlerberechnung und Rückkopplung durch $a[\cdot]$ zu ersetzen. Das Fehlersignal der DFE ist durch

$$e[k] = v[k] - \hat{a}[k-k_0] \tag{12}$$

definiert. Es gilt

$$e[k] = \sum_{i=1}^{N} P_i \left\{ \boldsymbol{f}_i^H[k]\boldsymbol{r}_i[k] \right\} - \boldsymbol{b}^T[k]\hat{\boldsymbol{a}}[k] - \hat{a}[k-k_0].\qquad(13)$$

Für das Weitere werden nun die Filterkoeffizientenvektoren und Filtereingangsvektoren zu je einem Vektor zusammengefaßt,

$$\boldsymbol{w}[k] = \begin{bmatrix} \boldsymbol{f}_1^T[k] & \boldsymbol{f}_2^T[k] & \cdots & \boldsymbol{f}_N^T[k] & \boldsymbol{b}^T[k] \end{bmatrix}^T,\qquad(14)$$

$$\boldsymbol{u}[k] = \begin{bmatrix} \boldsymbol{r}_1^T[k] & \boldsymbol{r}_2^T[k] & \cdots & \boldsymbol{r}_N^T[k] & -\hat{\boldsymbol{a}}^T[k] \end{bmatrix}^T\qquad(15)$$

Der LMS-Algorithmus zur adaptiven Einstellung der Filterkoeffizientenvektoren ist wie beschrieben in S. Haykin "Adaptive Filter Theory", Prentice-Hall, Upper Saddle River, New Jersey, third Edition, 1996, durch die folgende Gleichung gegeben:

$$w[k+1] = w[k] - \mu e[k]\, u[k],\qquad(16)$$

wobei $\mu$ einen Schrittweitenparameter bezeichnet, der für eine schnelle Konvergenz des Algorithmus bei gleichzeitiger Stabilität geeignet zu wählen ist. Initialisiert wird die Rekursion z.B. gemäß

$$w[0] = 0\,.\qquad(17)$$

Die beschriebene DFE-Struktur zur Interferenzunterdrückung kann auch bei zusätzlicher sendeseitiger $M$-facher (M $\geq$ 1) Antennendiversität angewendet werden, auf der z.B. space-time-codierte Übertragung zur Kapazitätserhöhung beruht, wie in A.F. Naguib, N. Seshadri, und A.R. Calderbank "Increasing Data Rate over Wireless Channels", IEEE Signal Processing Magazine, 76-92, May 2000, beschrieben. Z.B. kann das vorgeschlagene Verfahren direkt in Verbindung mit dem space-timecodierten Übertragungsverfahren nach J.H. Winters "The Diversity Gain of Transmit Diversity in Wireless Systems with Rayleigh Fading", IEEE Transactions on Vehicular Technology, 119-123, February 1998, eingesetzt werden. Im Sinn der Erfindung sind unter näherungsweisen PAM-Übertragungsverfahren Verfahren zu verstehen, deren Sendesignal mit hinreichender Genauigkeit durch ein PAM-Signal dargestellt werden kann, beispielsweise binäre Continuous Phase Modulation (CPM).

Als spezielles Ausführungsbeispiel wird im nachfolgenden der Fall des Mono-Empfangs ($N = 1$) betrachtet. Dieser Fall ist vor allem für Mobilstationen relevant. Hier kann im Gegensatz zu Basisstationen Antennendiversität meist nicht eingesetzt werden, da dies im Widerspruch zu einer kompakten, stromsparenden und kostengünstigen Geräteausführung steht. Wieder wird vorausgesetzt, daß die Datensequenzen sowohl des Nutzsignals als auch der Interferer rein reell und die entsprechenden Impulsantworten hinreichend unterschiedlich sind. Die entsprechende DFE-Struktur mit einer Projektion $P\{\cdot\}$ ist in Figur 7 dargestellt.

Während die beschriebenen Strukturen bei hinreichend hohen Filterlängen $L_i{}^f$ und $L^b$ eine sehr gute Interferenzunterdrückung gewährleisten, können in der Praxis aus Komplexitätsgründen und aufgrund einer zu kurzen Trainingssequenz meist nur relativ kurze Feedforward- und Feedback-Filter eingesetzt werden. In diesem Fall enthält das Signal nach Gl. (8) in der Regel eine nicht zu vernachlässigende Störung durch Restinterferenz, und es resultiert ohne weitere Maßnahmen eine Degradation der Leistungsfähigkeit. Somit empfiehlt sich im Fall des Einsatzes kurzer DFE-Filter eine Verfeinerung des Verfahrens, die beispielhaft in Fig. 8 dargestellt ist. Bei dieser Verbesserung kann nun zusätzlich die Summe der orthogonalen Komplemente der Projektionen der Feedforward-Filter-Ausgangssignale betrachtet werden,

$$t[k] = \sum_{i=1}^{N} Q_i \{ \mathbf{f}_i^H[k] \mathbf{r}_i[k] \}, \qquad (18)$$

wobei $Q_i\{\cdot\}$ Projektionen auf komplexe Vektoren q,mit Länge Eins bezeichnen. Dabei ist Vektor $q_i$ orthogonal zum zur Projektion $P_i\{\cdot\}$ gehörigen Vektor $\mathbf{p}_i$. Das Signal $t[k]$ enthält i. allg. einen höheren Störanteil als Signal $s[k]$, jedoch auch einen Nutzanteil, d.h.

$$t[k] = \sum_{\kappa=\kappa_1}^{\kappa_2} c[\kappa] a[k - k_0 - \kappa] + n_t[k], \qquad (19)$$

wobei sowohl die Impulsantwort $c[\cdot]$, deren Koeffizienten im Bereich $\kappa_1 \le \kappa \le \kappa_2$ ungleich Null sind, als auch die aus Rauschen und Interferenz bestehende Störung $n_t[k]$ rein reellwertig sind. Die Koeffizienten $c[\kappa]$ können nach abgeschlossener DFE-Adaption in einfacher Weise mittels eines Kanalschätzverfahrens bestimmt werden. Nach erfolgter Kanalschätzung kann eine Schätzung der Varianz $\sigma_{n_t}^2$ der Störung $n_t[k]$ vorgenommen werden.

Es ist nun vorteilhaft, das Signal $t[k]$ ebenfalls in der trellisbasierten Entzerrung zu verwenden. Dazu wird das Signal $s[k]$ nach Gl. (8) zuerst in der Form

$$s[k] = a[k - k_0] + \sum_{\kappa=1}^{L^h} b[\kappa] a[k - k_0 - \kappa] + n_s[k] \qquad (20)$$

dargestellt, wobei die Störung $n_s[k]$ die Varianz $\sigma_{n_s}^2$ besitzt und wiederum Rauschen und Interferenz beinhaltet. Zur Verwertung der beiden Signale $s[k]$ und $t[k]$ in einer trellisbasierten Entzerrung ist als Zweigmetrik im Trellisdiagramm beispielsweise

$$\lambda[k] = \frac{1}{\sigma_{n_s}^2} \left| s[k] - \tilde{a}[k - k_0] - \sum_{\kappa=1}^{L^h} b[\kappa] \tilde{a}[k - k_0 - \kappa] \right|^2$$

$$+ \frac{1}{\sigma_{n_t}^2} \left| t[k] - \tilde{a}[k - k_0] - \sum_{\kappa=\kappa_1}^{\kappa_2} c[\kappa] \tilde{a}[k - k_0 - \kappa] \right|^2 \qquad (21)$$

zu wählen (Maximum Ratio Combining), wobei $\tilde{a}[\cdot]$ beim Entzerrverfahren MLSE von den Zustandsübergängen abhängige Versuchssymbole darstellen; bei zustandsreduzierten Entzerrverfahren stellen $\tilde{a}[k-k_0-\kappa]$ für $\kappa \le \kappa_{red}$ ebenfalls Versuchssymbole dar und für $\kappa > \kappa_{red}$ zustandsabhängige Pfadregisterinhalte, wobei $\kappa_{red}$ vom gewählten Zustandsreduktionsverfahren abhängt. Zu beachten ist, daß für Gl. (21) statistisch unabhängige gaußverteilte weiße Störungen $n_s[\cdot]$ und $n_t[\cdot]$ angenommen wurden. Dies ist in der Praxis höchstens näherungsweise erfüllt; insbesondere $n_t[\cdot]$ besitzt i. allg. eine gewisse Farbigkeit. Somit empfiehlt es sich, das Signal $t[k]$ vor Verwendung in der trellisbasierten Entzerrung mit einem Noise -Whitening-Filter zu filtern, das $n_t[\cdot]$ in eine weiße Störung überführt und ausgehend von der Autokorrelationsfolge von $n_t[\cdot]$, die geeignet zu schätzen ist, bestimmt werden kann. In Gl. (21) ist dann $\sigma_{n_t}^2$ durch die Störvarianz am Ausgang des Noise-Whitening-Filters zu ersetzen, $t[k]$ durch das Signal am Ausgang des Noise-Whitening-Filters, und $c[\cdot]$ durch die Faltung der ursprünglichen Impulsantwort mit der Impulsantwort des Noise-Whitening-Filters.

Mit der vorgestellten zweikanaligen Struktur kann ein Diversity-Effekt und damit auch eine hohe Leistungsfähigkeit bei Verwendung kurzer DFE-Filter erzielt werden.

**Patentansprüche**

1. Verfahren zur Interferenzunterdrückung für TDMA und/oder FDMA-Übertragung, die zumindest Pulsamplitudenmodulation oder binäre CPM/Continuous Phase Modulation umfasst, mit einer oder mehreren Empfangsantennen, folgende Schritte umfassend:

   a) Filterung zumindest eines komplexwertigen Empfangssignals $r_i[k]$ einer Empfangsantenne mit einem Filter mit komplexwertigen Koeffizienten $f_i[k]$ zur Erzeugung zumindest eines Ausgangssignals $y_i[k]$;
   b) anschließend Bilden zumindest einer Projektion $P_i$ des zumindest einen Ausgangssignals $y_i[k]$ auf einen diesem Ausgangssignal $y_i[k]$ zugeordneten Richtungsvektor $\boldsymbol{p}_i$, wobei die Dimension des Richtungsvektors $\boldsymbol{p}_i$ unabhängig von der Anzahl der Empfangsantennen gleich zwei beträgt; und

   falls die Anzahl der Projektionen $P_i$ eins beträgt:

   c1) Zuführen der Projektion $P_i$ an eine Einrichtung zur Detektion; oder falls die Anzahl der Projektionen $P_i$ zwei und mehr beträgt:
   d1) Summieren einer Mehrzahl der Projektionen $P_i$ zur Bildung eines Summensignals $s[k]$; und
   d2) Zuführen des Summensignals $s[k]$ an eine Einrichtung zur Detektion.

2. Verfahren nach Anspruch 1,
   wobei in Schritt c1) und/oder in Schritt d2) die Einrichtung zur Detektion zur Entzerrung ausgebildet ist.

3. Verfahren nach Anspruch 1 oder 2,
   **dadurch gekennzeichnet,**
   **daß** in Schritt d1) alle Projektionen $P_i$ zur Bildung des Summensignals s[k] summiert werden.

4. Verfahren nach einem der vorhergehenden Ansprüche,
   **dadurch gekennzeichnet,**
   **daß** mindestens zwei Empfangssignale $r_i[k]$ vorliegen und die zugehörigen mindestens zwei Ausgangssignale $y_i[k]$ in Schritt b) auf identische Richtungsvektoren projiziert werden.

5. Verfahren nach einem der vorhergehenden Ansprüche,
   **dadurch gekennzeichnet,**
   **daß** für die Filterung der Empfangssignale in Schritt a) Feedforward-Filter einer DFE mit reellwertigem Feedback-Filter verwendet werden, die optimiert werden, gemäß den Kriterien ZF, MMSE, maximaler Störabstand oder Impulsverkürzung.

6. Verfahren nach einem der vorhergehenden Ansprüche,
   **dadurch gekennzeichnet,**
   **daß** zur Optimierung der Filterkoeffizienten die Signale nach den Projektionen herangezogen werden.

7. Verfahren nach einem der vorhergehenden Ansprüche,
   **dadurch gekennzeichnet,**
   **daß** zur Einstellung der Filterkoeffizienten des mindestens einen komplexwertigen Filters ein adaptiver Algorithmus verwendet wird.

8. Verfahren nach Anspruch 7,
   **dadurch gekennzeichnet,**
   **daß** der adaptive Algorithmus zur Einstellung der Filterkoeffizienten eine dem Empfänger bekannte Trainingssequenz verwendet.

9. Verfahren nach Anspruch 7,
   **dadurch gekennzeichnet,**
   **daß** ein adaptiver Algorithmus zur Einstellung der Filterkoeffizienten verwendet wird, ohne Verwendung einer im Empfänger bekannten Trainingssequenz.

10. Verfahren nach einem der vorhergehenden Ansprüche,
    **dadurch gekennzeichnet,**

**daß** die zugehörigen orthogonalen Komplemente der Projektionen von mindestens einem gefilterten Ausgangssignal $y_i[k]$ berechnet werden.

**11.** Verfahren nach einem der vorhergehenden Ansprüche 1 bis 10,
wobei die zu unterdrückende Interferenz zumindest durch einen Teil der Sendesignale bei sendeseitiger Antennendiversität dargestellt wird.

**12.** System zur Interferenzunterdrückung für TDMA und/oder FDMA-Übertragung, die zumindest Pulsamplitudenmodulation oder binäre CPM Continuous Phase Modulation umfasst, umfassend:

- eine oder mehrere Empfangsantennen
- mindestens eine Filtervorrichtung mit komplexwertigen Koeffizienten $f_i[k]$, wobei die mindestens eine Filtervorrichtung ausgelegt ist zur Filterung mindestens eines komplexwertigen Empfangssignals $r_i\,[k]$ einer Empfangsantenne, zur Erzeugung zumindest eines Ausgangssignals $y_i[k]$;

**dadurch gekennzeichnet,**
**daß** das System weiterhin umfasst:

- mindestens eine Projektionsvorrichtung, an die das mindestens eine Ausgangssignal $y_i\,[k]$ gekoppelt ist, zur Bildung einer Projektion $P_i$ des zumindest einen Ausgangssignals $y_i\,[k]$ auf einen diesem Ausgangssignal $y_i$ $[k]$ zugeordneten Richtungsvektor $\boldsymbol{p}_i$, wobei die Dimension des Richtungsvektors $\boldsymbol{p}_i$ unabhängig von der Anzahl der Empfangsantennen gleich zwei beträgt; und

falls die Anzahl der Projektionen $P_i$ eins beträgt:

- eine Detektionsvorrichtung, an die das Ausgangssignal der Projektion $P_i$ gekoppelt ist; oder

falls die Anzahl der Projektionen $P_i$ zwei und mehr beträgt:

- eine Summiervorrichtung zum Summieren einer Mehrzahl der Projektionen $P_i$ zur Bildung eines Summensignals $s[k]$; und
- eine Detektionsvorrichtung, an die das Summensignal $s[k]$ gekoppelt ist.

## Claims

**1.** Method for interference suppression for TDMA and/or FDMA transmission, which at least comprises pulse amplitude modulation or binary CPM, Continuous Phase Modulation, with one or several receive antennas, comprising the following steps:

a) filtering of at least one complex-valued received signal $r_i\,[k]$ of a receive antenna with a filter with complex-valued coefficients f$_i\,[k]$ for generation of at least one output signal $y_i$, $[k]$;
b) subsequently forming of at least one projection $P_i$ of the at least one output signal $y_i\,[k]$ onto a direction vector $\boldsymbol{p}_i$ which is assigned to this output signal $y_i\,[k]$, wherein the dimension of the direction vector $\boldsymbol{p}_i$ is two, independently of the amount of receive antennas; and wherein

for the case that the number of projections $P_i$ is one:

c1) feeding the projection $P_i$ into a device for detection; or for the case that the number of projections $P_i$ is two or more:
d1) summing of a majority of the projections $P_i$ for forming a sum signal $s[k]$; and d2) feeding the sum signal $s[k]$ into a device for detection.

**2.** Method according to claim 1,
wherein in step c1) and/or in step d2) the device for detection is developed for correcting of distortion.

**3.** Method according to claim 1 or 2,
**characterized in that**

in step d1) all projections $P_i$ for forming of the sum signal $s[k]$ are summed up.

4. Method according to any of the preceding claims,
   **characterized in that**
   at least two received signals $r_i[k]$ are present and the associated at least two output signals $y_i[k]$ in step b) are projected onto identical direction vectors.

5. Method according to any one of the preceding claims,
   **characterized in that**
   feedforward filters of a DFE with real-valued feedback filter are used for filtering of the received signals in step a), which are optimised according to the criteria ZF, MMSE, maximal signal-to-noise-ratio or impulse truncation.

6. Method according to any one of the preceding claims,
   **characterized in that**
   the signals after the projections are utilized for optimisation of the filter coefficients.

7. Method according to any one of the preceding claims,
   **characterized in that**
   an adaptive algorithm is used for adjustment of the filter coefficients of the at least one complex-valued filter.

8. Method according to claim 7,
   **characterized in that**
   the adaptive algorithm for adjustment of the filter coefficients utilizes a training sequence known at the receiver.

9. Method according to claim 7,
   **characterized in that**
   an adaptive algorithm is used for adjustment of the filter coefficients without using a training sequence known at the receiver.

10. Method according to any one of the preceding claims,
    **characterized in that**
    the corresponding orthogonal complements of the projections of at least one filtered output signal $y_i[k]$ are calculated.

11. Method according to any one of the preceding claims 1 to 10,
    wherein the interference to be suppressed is represented by at least a part of the transmit signals for the case of transmit antenna diversity.

12. System for interference suppression for TDMA and/or FDMA transmission, which at least comprises pulse amplitude modulation or binary CPM, Continuous Phase Modulation, comprising:

    - one or several receive antennas;
    - at least one filter device with complex-valued coefficients $f_i[k]$, wherein the at least one filtering device is designed for filtering of at least one complex-valued received signal $r_i[k]$ of a receive antenna, for generation of at least one output signal $y_i[k]$;

    **characterized in that**
    the system furthermore comprises:

    - at least one projection device to which the at least one output signal $y_i[k]$ is coupled, for forming a projection $P_i$ of the at least one output signal $y_i[k]$ onto one direction vector $\boldsymbol{p}_i$ which is assigned to this output signal $y_i[k]$, wherein the dimension of the direction vector $\boldsymbol{p}_i$ is two, independently of the number of the receive antennas; and

    for the case that the number of projections $P_i$ is one:

    - a device for detection to which the output signal of the projection $P_i$ is coupled; or for the case that the number of projections $P_i$ is two or more:

- a summation device for summing a majority of the projections $P_i$ for forming of a sum signal $s[k]$; and
- a device for detection to which the sum signal $s[k]$ is coupled.

**Revendications**

1. Procédé de suppression d'interférence pour la transmission A.M.R.T. et/ou F.D.M.A., comprenant au moins la modulation par impulsions en amplitude ou la modulation CPM (Continuous Phase Modulation) binaire, comportant une ou plusieurs antennes réceptrices et comprenant les étapes suivantes:

   a) filtrage d'au moins un signal de réception $r_i$ [$k$] à valeurs complexes d'une antenne réceptrice comprenant un filtre à coefficients $f_i[k]$ à valeurs complexes afin de générer au moins un signal de sortie $y_i[k]$;

   b) ensuite, formation d'au moins une projection Pi du au moins un signal $y_i[k]$ sur un vecteur de direction $\boldsymbol{p}_i$ attribué audit signal de sortie $y_i[k]$, la dimension du vecteur de direction $\boldsymbol{p}_i$ étant égale à deux, quelque soit le nombre d'antennes réceptrices; et

   au cas où le nombre de projections $P_i$ s'élèverait à un:

   c1) admission de la projection $P_i$ vers un organe de détection; ou, au cas où le nombre de projections $P_i$ s'élèverait à deux ou plus:
   d1) sommation d'une pluralité des projections $P_i$ pour la formation d'un signal cumulé $s[k]$; et
   d2) admission du signal cumulé $s[k]$ vers un organe de détection.

2. Procédé selon la revendication 1, l'organe de détection, dans les étapes c1) et/ou d2), étant conçu pour l'égalisation.

3. Procédé selon la revendication 1 ou 2, **caractérisé en ce que** dans l'étape d1 ), la totalité des projections $P_i$ prévues à la formation du signal cumulé $s[k]$ sont additionnées.

4. Procédé selon l'une des revendications précédentes, **caractérisé en ce qu'**il y a au moins deux signaux de réception $r_i[k]$, les au moins deux signaux de sortie $y_i[k]$ associés sont projetés à des vecteurs de direction identiques dans l'étape b).

5. Procédé selon l'une des revendications précédentes, **caractérisé en ce que** pour le filtrage des signaux de réception dans l'étape a), des filtres à réaction positive d'une DFE à filtre à rétroaction à valeur réelle sont utilisés qui sont optimisés, conformément aux critères ZF, MMSE, rapport maximal signal/bruit ou raccourcissement d'impulsion.

6. Procédé selon l'une des revendications précédentes, **caractérisé en ce que** pour l'optimisation des coefficients des filtres, on utilise les signaux après les projections.

7. Procédé selon l'une des revendications précédentes, **caractérisé en ce que** pour le réglage des coefficients des filtres de l'un filtre au moins à valeur complexe, on met en oeuvre un algorithme adaptatif.

8. Procédé selon la revendication 7, **caractérisé en ce que** l'algorithme adaptatif servant au réglage des coefficients des filtres met en oeuvre une séquence d'entraînement connue au récepteur.

9. Procédé selon la revendication 7, **caractérisé en ce que** pour le réglage des coefficients des filtres, on met en oeuvre un algorithme adaptatif, sans avoir recours à une séquence d'entraînement connue au récepteur.

10. Procédé selon l'une des revendications précédentes, **caractérisé en ce qu'**il y a calcul des compléments orthogonaux associés des projections d'au moins un signal de sortie $y_i[k]$ filtré.

11. Procédé selon l'une des revendications précédentes 1 à 10, l'interférence à supprimer étant représentée par au moins une partie des signaux d'émission, avec diversité d'antenne côté émission.

12. Système de suppression d'interférence pour la transmission A.M.R.T. et/ou F.D.M.A., comprenant au moins la modulation par impulsions en amplitude ou la modulation CPM (Continuous Phase Modulation) binaire, comportant:

- une ou plusieurs antennes réceptrices,
- au moins un dispositif de filtrage à coefficients $f_i[k]$à valeurs complexes, le au moins un dispositif de filtrage étant dimensionné pour filtrer au moins un signal de réception $r_i[k]$ à valeurs complexes d'une antenne réceptrice afin de générer au moins un signal de sortie $y_i[k]$;

**caractérisé en ce que** le système comprend par ailleurs:

- au moins un dispositif de projection auquel est couplé le signal de sortie $y_i[k]$ au nombre d'au moins un, pour la formation d'une projection $P_i$ du signal de sortie $y_i[k]$ au nombre d'au moins un sur un vecteur de direction $\boldsymbol{p}_i$ attribué audit signal de sortie $y_i[k]$, la dimension du vecteur de direction $\boldsymbol{p}_i$ étant égale à deux, quelque soit le nombre d'antennes réceptrices; et

au cas où le nombre de projections $P_i$ s'élèverait à un:

- un organe de détection auquel est couplé le signal de sortie de la projection $P_i$, ou

au cas où le nombre de projections $P_i$ s'élèverait à deux ou plus:

- un dispositif de sommation pour la sommation d'une pluralité des projections $P_i$ pour la formation d'un signal cumulé $s[k]$; et
- un organe de détection auquel est couplé le signal cumulé $s[k]$.

Fig. 1 (SdT)

Fig. 2 (SdT)

Fig. 3 (SdT)

Fig. 4 (SdT)

Fig. 5

Fig. 6

Fig. 7

Fig. 8